# EUROPEAN PATENT APPLICATION

(11) **EP 4 749 411 A1**
(43) Date of publication of application: **27.05.2026**
(21) Application number: 25207464.6
(22) Date of filing: 08.10.2025
(51) Int. Cl.: G06F 3/0346, A63F 13/211, G06F 1/16, G06F 3/0354

(54) **INFORMATION PROCESSING METHOD, INFORMATION PROCESSING SYSTEM, AND INFORMATION PROCESSING PROGRAM**

(30) Priority: 26.11.2024 JP 2024205079
(71) Applicant: Nintendo Co., Ltd., Kyoto 601-8501 (JP)
(72) Inventor: TANAKA, Wataru, Kyoto, 601-8501 (JP)
(74) Representative: Bardehle Pagenberg Partnerschaft mbB Patentanwälte Rechtsanwälte

(57) **Abstract**

In a second mode in which a position of a virtual object (250) is determined based on output of an inertial sensor (83, 84, 96, 97), based on a correspondence relationship in which the virtual object (250) is located at a predetermined position within a display range when a controller (3, 4) is in a reference orientation, the position of the virtual object is determined in accordance with an orientation of the controller. When a first orientation of the controller when switching from a first mode, in which the position of the virtual object is determined based on output of a mouse sensor, to the second mode satisfies a first condition, the reference orientation is updated to an orientation allowing a position of the virtual object corresponding to the first orientation to be within the display range.

## Description

### CROSS REFERENCE TO RELATED APPLICATION

This application claims priority to Japanese Patent Application No. 2024-205079 filed on November 26, 2024, the entire contents of which are incorporated herein by reference.

### FIELD

The present disclosure relates to information processing.

### BACKGROUND AND SUMMARY

Conventionally, it has been known to switch between operating an aim sight position based on an operation on an operation portion and operating the aim sight position based on acquired coordinates on a display screen. It has also been known that an acceleration sensor may be used to acquire coordinates used for operating the aim sight position. It has also been known that in the switching of this operation, the acquired coordinates, the movement of a controller, and the operating state of the operation portion can be taken into consideration.

The above technology has room for improvement in the control of the aim sight position.

For example, the following configuration examples are exemplified.

### (Configuration 1)

Configuration 1 is directed to an information processing method using a controller including an inertial sensor and at least one of a mouse sensor and a directional operation portion operated by a user , the information processing method including: setting any one mode among a plurality of modes including a first mode and a second mode; in the first mode, determining a position of a virtual object, based on output of the directional operation portion or the mouse sensor; in the second mode, determining the position of the virtual object, based on output of the inertial sensor; when determining the position of the virtual object in the second mode, determining the position of the virtual object in accordance with an orientation of the controller, based on a correspondence relationship in which the virtual object is located at a predetermined position within a display range when the controller is in a reference orientation; and when a first orientation that is an orientation of the controller when switching from the first mode to the second mode satisfies at least a first condition, updating the reference orientation to an orientation allowing a position of the virtual object corresponding to the first orientation to be within the display range.

### (Configuration 2)

In Configuration 2 based on Configuration 1 above, the first condition may include a condition that the position of the virtual object corresponding to the first orientation is outside the display range.

### (Configuration 3)

In Configuration 3 based on Configuration 1 or 2 above, the information processing method may further include, when the first orientation satisfies the first condition, updating the reference orientation to the first orientation.

### (Configuration 4)

In Configuration 4 based on any one of Configurations 1 to 3 above, the predetermined position may be a position of a center of the display range.

### (Configuration 5)

In Configuration 5 based on any one of Configurations 1 to 4 above, the information processing method may further include, when the first orientation does not satisfy the first condition, moving the virtual object at a lower speed from a position of the virtual object in the first mode toward a position of the virtual object in the second mode than when the first orientation satisfies the first condition.

### (Configuration 6)

In Configuration 6 based on any one of Configurations 1 to 5 above, the information processing method may further include, if the position of the virtual object is outside the display range when switching from the second mode to the first mode, placing the virtual object within the display range.

### (Configuration 7)

In Configuration 7 based on Configuration 6 above, the information processing method may further include determining a position of the virtual object within the display range in accordance with the position of the virtual object outside the display range when switching from the second mode to the first mode.

### (Configuration 8)

In Configuration 8 based on any one of Configurations 1 to 7 above, the information processing method may further include: in the first mode and the second mode, updating the position of the virtual object to the predetermined position in accordance with a button operation; and when the position of the virtual object is updated to the predetermined position, updating the reference orientation to an orientation of the controller upon the updating.

### (Configuration 9)

In Configuration 9 based on any one of Configurations 1 to 8 above, the information processing method may further include switching from the first mode to the second mode at least when the output of the inertial sensor satisfies a second condition.

### (Configuration 10)

In Configuration 10 based on any one of Configurations 1 to 9 above, the information processing method may further include, in the first mode, determining the position of the virtual object, based on the output of the mouse sensor.

### (Configuration 11)

In Configuration 11 based on Configuration 10 above, the information processing method may further include: setting any one mode among a plurality of modes including the first mode, the second mode, and a third mode; when determining the position of the virtual object in the third mode, determining the position of the virtual object, based on the output of the directional operation portion; and when the first orientation when switching from the first mode or the third mode to the second mode satisfies at least the first condition, updating the reference orientation to an orientation allowing the position of the virtual object corresponding to the first orientation to be within the display range.

According to the exemplary embodiment, for example, more appropriate control can be provided for a virtual object such as an aim sight.

### BRIEF DESCRIPTION OF THE DRAWINGS

FIG. 1 is a diagram showing a non-limiting example of a state where a right controller 3 and a left controller 4 are attached to a main body apparatus 2;
FIG. 2 is six orthogonal views showing a non-limiting example of the right controller 3;
FIG. 3 is six orthogonal views showing a non-limiting example of the left controller 4;
FIG. 4 is a block diagram showing a non-limiting example of the internal configuration of the main body apparatus 2;
FIG. 5 is a block diagram showing a non-limiting example of the internal configurations of the main body apparatus 2, the right controller 3, and the left controller 4;
FIG. 6 is a diagram showing a non-limiting example of a state where the right controller 3 is operated while being grasped by a right hand;
FIG. 7 is a diagram showing a non-limiting example of a state where the right controller 3 is operated while being grasped by a right hand;
FIG. 8 is a diagram for describing a non-limiting example of an operation mode of a controller;
FIG. 9 is a diagram showing a non-limiting example of movement and display of an aim sight;
FIG. 10 is a diagram showing a non-limiting example of movement and display of the aim sight;
FIG. 11 is a diagram showing a non-limiting example of movement and display of the aim sight;
FIG. 12 is a diagram for describing a non-limiting example of control of the aim sight when the operation mode is switched;
FIG. 13 is a diagram for describing a non-limiting example of control of the aim sight when the operation mode is switched;
FIG. 14 is a diagram showing a non-limiting example of various data stored in a DRAM 69;
FIG. 15 is a non-limiting example of a flowchart of information processing;
FIG. 16 is a non-limiting example of a flowchart of the information processing;
FIG. 17 is a non-limiting example of a flowchart of the information processing; and
FIG. 18 is a non-limiting example of a flowchart of the information processing.

### DETAILED DESCRIPTION OF NON-LIMITING EXAMPLE EMBODIMENTS

Hereinafter, an exemplary embodiment will be described.

### [Example of hardware configuration of information processing system]

Hereinafter, a game system which is an example of an information processing system of the exemplary embodiment will be described. An example of a game system 1 according to the exemplary embodiment includes an information processing apparatus (sometimes referred to as "main body apparatus") 2, a left controller 4, and a right controller 3. The main body apparatus 2 according to the exemplary embodiment allows the left controller 4 and the right controller 3 to be attached thereto and detached therefrom.

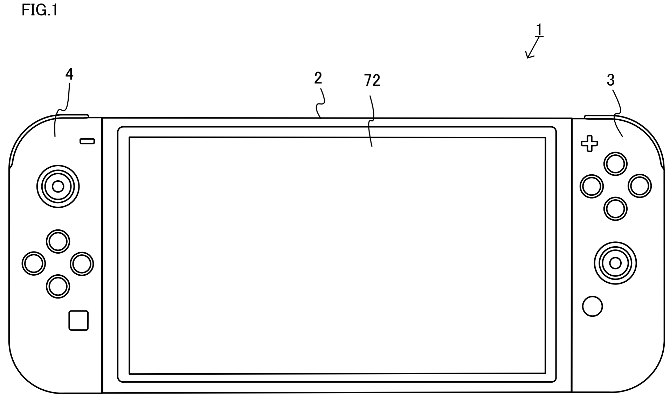

FIG. 1 is a diagram showing an example of a state where the left controller 4 and the right controller 3 are attached to the main body apparatus 2. As shown in FIG. 1, the left controller 4 and the right controller 3 are attached to and integrated with the main body apparatus 2. The main body apparatus 2 is an apparatus for executing various kinds of processing (e.g., game processing) in the game system 1. The main body apparatus 2 includes a display 72. The left controller 4 and the right controller 3 are each an input device including operation portions and the like on which a user performs input. Hereinafter, the left controller 4 and the right controller 3 are sometimes collectively referred to as "controller".

The display 72 displays images generated by the main body apparatus 2. The display 72 is, for example, a liquid crystal display device (LCD). A touch panel is provided on the screen of the display 72. The touch panel is, for example, a type capable of receiving a multi-touch input (e.g., electrical capacitance type).

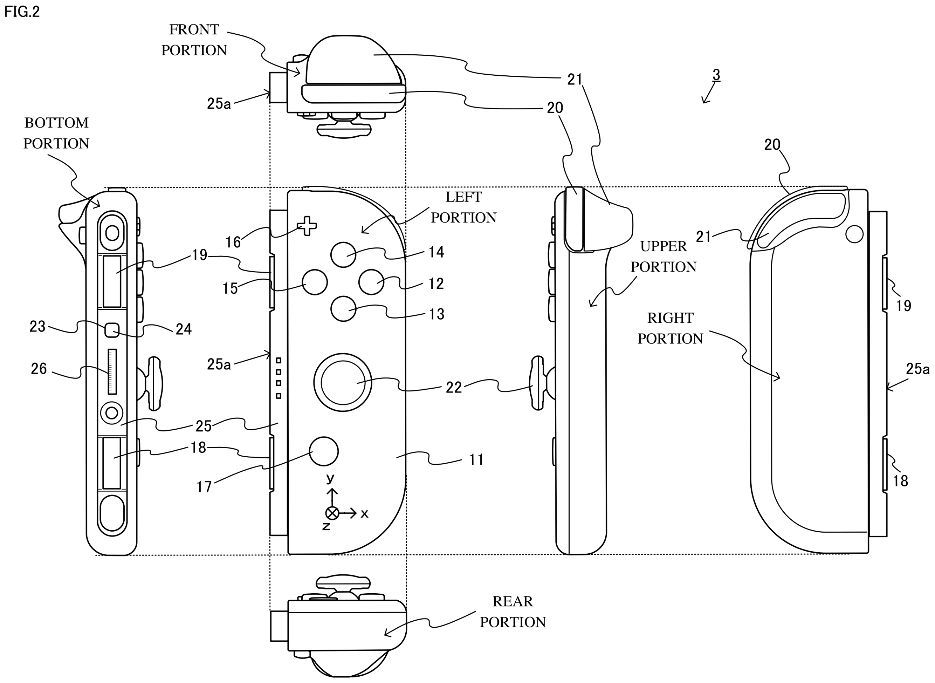

FIG. 2 is six orthogonal views schematically showing an example of the right controller 3. As shown in FIG. 2, the right controller 3 has a vertically long plate shape, has a housing 11, and has a front portion, a rear portion, an upper portion, a bottom portion, a right portion, and a left portion. In the right controller 3, the rear portion is located on a side opposite to the front portion, the bottom portion is located on a side opposite to the upper portion, and the left portion is located on a side opposite to the right portion. The distance between the front portion and the rear portion is larger than the distance between the upper portion and the bottom portion. The distance between the upper portion and the bottom portion is larger than the distance between the right portion and the left portion. In another exemplary embodiment, these distances may have another magnitude relationship. In the exemplary embodiment, a direction connecting the bottom portion and the upper portion may be referred to as an up-down direction, a direction perpendicular to the up-down direction and connecting the front portion and the rear portion is referred to as a front-rear direction, and a direction perpendicular to the up-down direction and the front-rear direction and connecting the right portion and the left portion is referred to as a left-right direction. In FIG. 2, x, y, and z axes are shown on a front view in which the left portion faces the near side, and represent a coordinate system of the right controller 3 (sometimes referred to as right controller coordinate system). In this coordinate system, a direction heading toward the right portion from the left portion is a z-axis plus direction. A direction perpendicular to the z axis and heading toward the upper portion from the bottom portion is an x-axis plus direction. A direction perpendicular to the z axis and the x axis and heading toward the front portion from the rear portion is a y-axis plus direction. When the bottom portion is directed in the gravity direction, an x-axis minus direction and the gravity direction coincide with each other. The x, y, and z axes in the description related to the right controller 3 are the x, y, and z axes in the right controller coordinate system unless otherwise noted. In the exemplary embodiment, portions such as the front portion and the bottom portion need not be perfectly flat, and may have a recess, a projection, and/or a slope. For example, the bottom portion includes a protruding portion 25 described later. A direction in which each portion faces and a direction connecting the portions are shown as approximate directions.

The right controller 3 has the protruding portion 25 which is fitted into a recessed portion (not shown) of the main body apparatus 2 in a state where the right controller 3 is attached to the main body apparatus 2. As shown in FIG. 2, the protruding portion 25 has a protruding shape protruding in the x-axis minus direction and having a left-right width shorter than that of the right controller 3 and a front-rear width shorter than that of the right controller 3. In the exemplary embodiment, the protruding portion 25 is a part of the bottom portion.

As described later, the right controller 3 can be grasped in an orientation in which the right controller 3 is vertically long, in a state of being detached from the main body apparatus 2. The right controller 3 has such a shape and a size that the right controller 3 can be grasped by one hand, in particular, a right hand, in a case of being grasped in the orientation in which the right controller 3 is vertically long. The right controller 3 can also be grasped in an orientation in which the right controller 3 is horizontally long, and may be grasped by both hands in a case of being grasped in the orientation in which the right controller 3 is horizontally long (not shown).

The right controller 3 has, at the left portion, an analog stick (sometimes simply referred to as a "stick") 22 which is an example of a directional input portion. The stick 22 can be used as a directional input portion via which an operation for inputting a direction can be performed. The stick may be referred to as directional operation portion. The user can perform directional input corresponding to a tilt direction by tilting the stick 22 in a desired direction, and can perform input with a magnitude corresponding to the tilt angle. In addition, the user can perform button input by pushing the stick 22 in. The directional input portion may, for example, be a directional pad or a slide pad. The directional input portion may be referred to as directional operation portion.

The right controller 3 has, at the left portion, a set of four buttons which are an A button 12, a B button 13, an X button 14, and a Y button 15, a + (plus) button 16, and a home button 17. The right controller 3 has an R button 20 and a ZR button 21 over a range from the front portion to the upper portion. The R button 20 and the ZR button 21 may be provided at only the front portion of the right controller 3, or may be provided only at the upper portion of the right controller 3. The right controller 3 has a button 18 and a button 19 at a top surface 25a of the protruding portion 25.

The right controller 3 has an opening 23 for a mouse sensor, at the top surface 25a of the protruding portion 25. The opening 23 for a mouse sensor is an opening of a light guide path for guiding light to a mouse sensor 24 provided inside the right controller 3. The mouse sensor 24 is an optical mouse sensor and may include a light emitting portion and a light receiving portion. Light to be detected by the light receiving portion may be visible light or light having an invisible wavelength. The mouse sensor 24 includes at least a light receiving portion and may not necessarily include a light emitting portion. The mouse sensor 24 acquires data that enables calculation of movement or the like, on a placement surface, of the right controller 3 placed such that the top surface 25a of the protruding portion 25 of the bottom portion faces the placement surface. Thus, the right controller 3 can be used also as a mouse. An operation in which the right controller 3 is used as a mouse is sometimes referred to as "mouse operation". The placement surface is not limited to a flat surface and may be a curved surface or the like, or may be, for example, the surface of a thigh or the like of the user.

In the exemplary embodiment, the right controller 3 has, at the protruding portion 25, a terminal 26 for the right controller 3 to perform wired communication with the main body apparatus 2. The terminal 26 is provided on the inner peripheral surface of a recess formed in the top surface 25a of the protruding portion 25, for example.

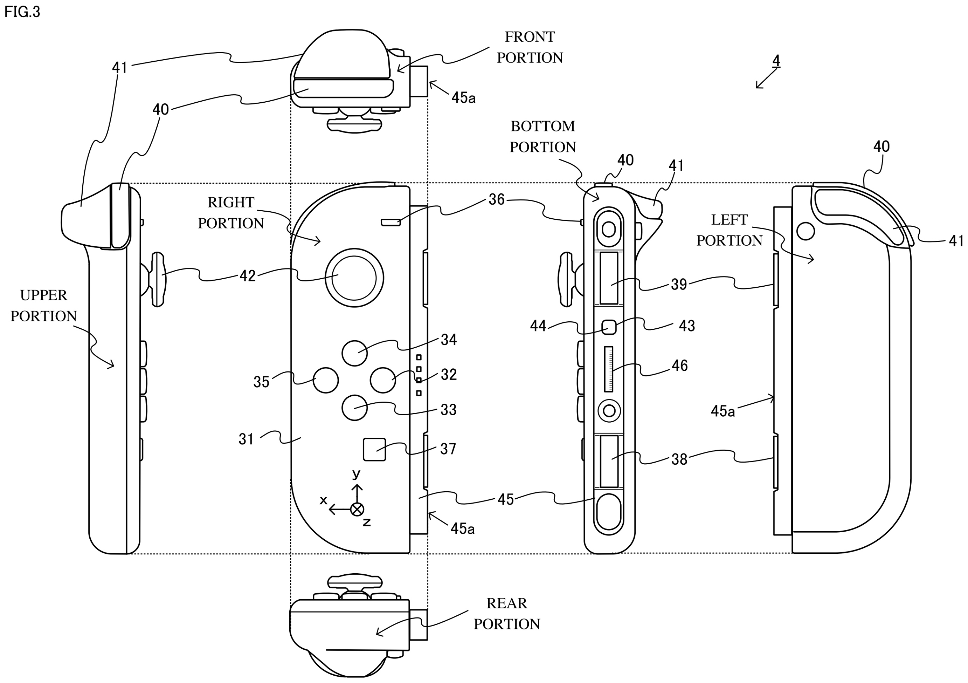

FIG. 3 is six orthogonal views schematically showing an example of the left controller 4. The description of similar configurations as those of the right controller 3 is omitted. The left controller 4 has, at a right portion, a stick 42, a set of four buttons which are a right direction button 32, an up direction button 33, a down direction button 34, and a left direction button 35, a capture button 37, and a - (minus) button 36. The buttons 32 to 35 may be one directional pad. In the right controller 3, the stick 22 is located rearward of the buttons 12 to 15, whereas in the left controller 4, the stick 42 is located frontward of the buttons 32 to 35. In FIG. 3, x, y, and z axes are shown on a front view in which the right portion faces the near side, and represent a coordinate system of the left controller 4 (sometimes referred to as "left controller coordinate system"). In this coordinate system, a direction heading toward the left portion from the right portion is a z-axis plus direction. A direction perpendicular to the z axis and heading toward the upper portion from the bottom portion is an x-axis plus direction. A direction perpendicular to the z axis and the x axis and heading toward the front portion from the rear portion is a y-axis plus direction. When the bottom portion is directed in the gravity direction, an x-axis minus direction and the gravity direction coincide with each other. The x, y, and z axes in the description related to the left controller 4 are the x, y, and z axes in the left controller coordinate system unless otherwise noted.

The left controller 4 has a protruding portion 45 which is fitted into a recessed portion (not shown) of the main body apparatus 2 in a state where the left controller 4 is attached to the main body apparatus 2. As with the right controller 3, the protruding portion 45 includes buttons 38 and 39, an opening 43 for a mouse sensor, a mouse sensor 44, and a terminal 46.

As with the right controller 3, the left controller 4 can be grasped in an orientation in which the left controller 4 is vertically long or horizontally long, in a state of being detached from the main body apparatus 2.

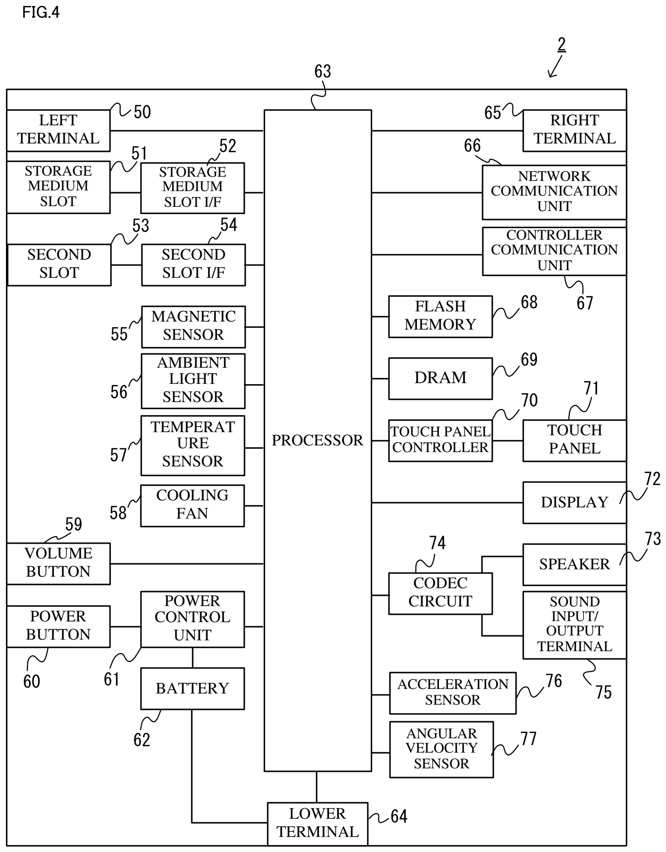

FIG. 4 is a block diagram showing an example of the internal configuration of the main body apparatus 2. The main body apparatus 2 includes a processor 63. The processor 63 is an information processing unit which executes various kinds of information processing to be executed in the main body apparatus 2. The processor 63 may be composed of, for example, a plurality of processors and cores, or typically, a plurality of CPUs (Central Processing Units) and cores, or may be formed by a SoC (System-on-a-chip) including a plurality of functions such as a CPU function and a GPU (Graphics Processing Unit) function. The processor 63 executes various kinds of information processing by executing an information processing program (e.g., a game program, etc.) stored in a storage unit (specifically, an internal storage medium such as a flash memory 68, an external storage medium attached to a slot 51 or the like, etc.). In the exemplary embodiment, the term "processor" may include at least a CPU, a GPU, an ASIC (Application Specific Integrated Circuit), an FPGA (Field Programmable Gate Array), etc. In the exemplary embodiment, a computer includes at least one processor as an example and may further include a storage unit such as a memory.

The main body apparatus 2 includes the flash memory 68, and a DRAM (Dynamic Random Access Memory) 69, as an example of an internal storage medium. The flash memory 68 is a memory that is mainly used for storing various data to be stored in the main body apparatus 2. The DRAM 69 is a memory that is mainly used for temporarily storing various data to be used in information processing. The processor 63 reads and writes data from and into storage media such as the flash memory 68 and the DRAM 69 as appropriate, to execute various kinds of information processing.

The main body apparatus 2 includes various components as shown in FIG. 4. Hereinafter, the components will be briefly described. A storage medium slot interface (sometimes referred to as "slot I/F") 52 performs reading/writing of data from/into a storage medium (e.g., a dedicated memory card) attached to the storage medium slot 51, in response to an instruction from the processor 63. A second slot I/F 54 performs reading/writing of data from/into a storage medium attached to a second slot 53, in response to an instruction from the processor 63.

A network communication unit 66 performs communication (e.g., Internet communication using wireless communication) with an external device via a network. A controller communication unit 67 performs wireless communication (e.g., communication compliant with the standard of Bluetooth (registered trademark)) with the left controller 4 and/or the right controller 3.

A left terminal 50 is a terminal for performing wired communication between the processor 63 and the left controller 4. A right terminal 65 is a terminal for performing wired communication between the processor 63 and the right controller 3. A lower terminal 64 is a terminal for performing communication with another apparatus (e.g., a stationary monitor) via a cradle when the lower terminal 64 is attached to the cradle, for example.

A touch panel controller 70 generates data indicating a position at which a touch input was performed, based on a signal from a touch panel 71 disposed on the display surface of the display 72, and outputs the data to the processor 63. The display 72 displays an image generated by the processor 63 and/or an image acquired from the outside.

A codec circuit 74 controls input and output of sound data to and from a speaker 73 and a sound input/output terminal 75.

A power control unit 61 controls supply of power from a battery 62 to each unit of the main body apparatus 2 (i.e., each of units to be supplied with power from the battery 62), based on an instruction from the processor 63, and starts or stops supply of power in response to pressing of a power button 60.

A volume button 59 is a button for adjusting the volume of sound outputted from the speaker 73, etc. In addition, a cooling fan 58 is a fan for cooling the interior of the main body apparatus 2.

The main body apparatus 2 includes various sensors such as a magnetic sensor 55, an ambient light sensor 56, a temperature sensor 57, an acceleration sensor 76, and an angular velocity sensor 77. The processor 63 can execute various kinds of processing, based on information from these sensors.

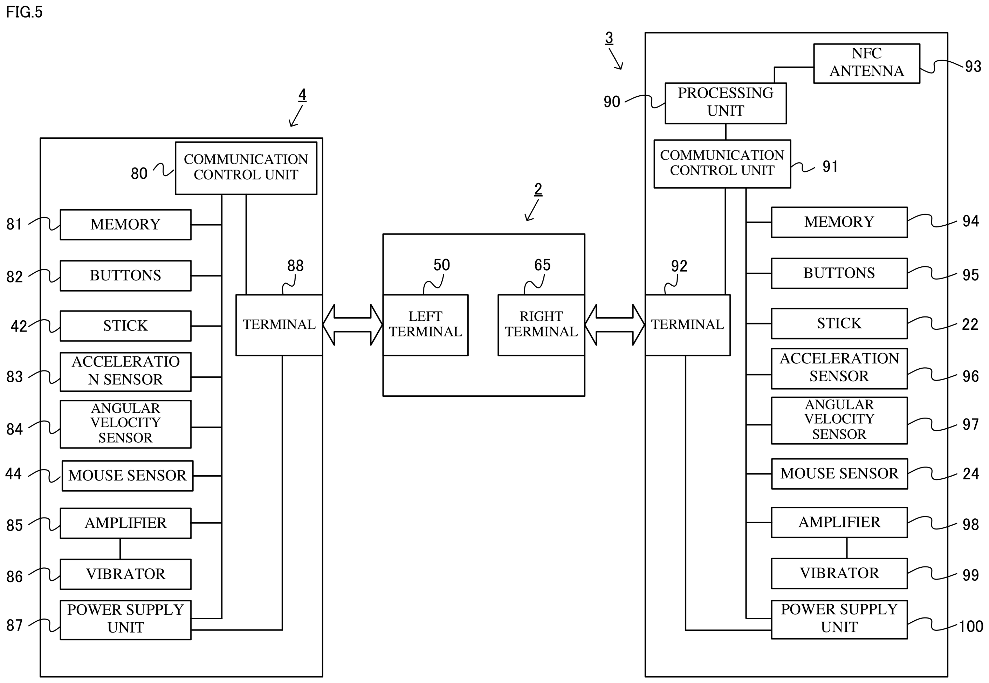

FIG. 5 is a block diagram showing an example of the internal configurations of the main body apparatus 2, the left controller 4, and the right controller 3. The details of the internal configuration of the main body apparatus 2 have already been shown in FIG. 4 and therefore are not shown in FIG. 5.

The left controller 4 includes a communication control unit 80 which performs communication with the main body apparatus 2. As shown in FIG. 5, the communication control unit 80 is connected to various components including a terminal 88. In a state where the left controller 4 is attached to the main body apparatus 2, the communication control unit 80 performs wired communication with the main body apparatus 2 via the terminal 88, and in a state where the left controller 4 is detached from the main body apparatus 2, the communication control unit 80 performs wireless communication (specifically, communication compliant with the standard of Bluetooth (registered trademark)) with the main body apparatus 2.

The left controller 4 includes a memory 81 such as a flash memory, for example. The communication control unit 80 is formed by a processor such as a microcomputer (or a microprocessor), for example, and executes various kinds of processing by executing firmware stored in the memory 81.

The left controller 4 includes each button 82 (specifically, the buttons 32 to 34, etc.) and the stick 42. Each button 82 and the stick 42 output information regarding operations performed thereon, to the communication control unit 80.

The left controller 4 includes an inertial sensor. Specifically, the left controller 4 includes an acceleration sensor 83 and an angular velocity sensor 84 as an inertial sensor. The acceleration sensor 83 detects the magnitudes of accelerations along predetermined three axial directions (e.g., the x, y, and z-axis directions). The acceleration sensor 83 may detect an acceleration along one axial direction or accelerations along two axial directions. The angular velocity sensor 84 detects angular velocities about the predetermined three axes. The angular velocity sensor 84 may detect an angular velocity about one axis or angular velocities about two axes. The angular velocity sensor may also be referred to as "gyro-sensor". The acceleration sensor 83 and the angular velocity sensor 84 are connected to the communication control unit 80. The detection results of the acceleration sensor 83 and the angular velocity sensor 84 are repeatedly outputted to the communication control unit 80 at appropriate timings. The right controller 3 and the left controller 4 may each include either an acceleration sensor or an angular velocity sensor, or another sensor, as the inertial sensor.

The left controller 4 includes the mouse sensor 44. The mouse sensor 44 acquires data for calculating movement or the like of the left controller 4 placed on a placement surface. The data acquired by the mouse sensor 44 is repeatedly outputted to the communication control unit 80 at appropriate timings.

The communication control unit 80 acquires information regarding inputs (information regarding operations on the buttons and the stick and detection results from the sensors) from each input unit (specifically, each button 82, the stick 42, and the respective sensors 83, 84, and 44). The communication control unit 80 transmits the acquired information or operation data including information obtained by performing predetermined processing on the acquired information, to the main body apparatus 2. The operation data is repeatedly transmitted at a rate of one time per predetermined period.

By the above operation data being transmitted to the main body apparatus 2, the main body apparatus 2 can acquire inputs performed on the left controller 4. That is, the main body apparatus 2 can determine operations on each button 82 and the stick 42, based on the operation data. In addition, the main body apparatus 2 can calculate information regarding the movement and/or orientation of the left controller 4, based on the operation data (specifically, the detection results of the acceleration sensor 83 and/or the angular velocity sensor 84). Moreover, the main body apparatus 2 can calculate information regarding mouse operations performed on the left controller 4, based on the operation data (specifically, the detection results of the mouse sensor 44).

The left controller 4 includes an amplifier 85 and a vibrator 86. The amplifier 85 amplifies control signals received from the communication control unit 80 and generates drive signals. The vibrator 86 performs vibrating motion in response to the drive signals generated by the amplifier 85 to vibrate the left controller 4.

The left controller 4 includes a power supply unit 87. The power supply unit 87 includes a battery and a power control circuit. The power control circuit is connected to the battery and supplies power to each unit of the left controller 4 (specifically, each of units to be supplied with power from the battery).

As shown in FIG. 5, the right controller 3 includes a communication control unit 91 which is composed of a processor or the like and performs communication with the main body apparatus 2. The right controller 3 includes a memory 94 connected to the communication control unit 91. The communication control unit 91 is connected to components including a terminal 92. The communication control unit 91 and the memory 94 have the same functions as the communication control unit 80 and the memory 81 of the left controller 4. Therefore, the communication control unit 91 is capable of performing communication with the main body apparatus 2 by both of wired communication via the terminal 92 and wireless communication not via the terminal 92, and controls communication that the right controller 3 performs with the main body apparatus 2.

The right controller 3 includes input units similar to those of the left controller 4. Specifically, the right controller 3 includes each button 95 (A button 12, B button 13, X button 14, Y button 15, etc.), the stick 22, an inertial sensor (acceleration sensor 96 and angular velocity sensor 97), and the mouse sensor 24. These input units have the same functions as those of the left controller 4 and operate in the same manner.

The right controller 3 includes an amplifier 98, a vibrator 99, and a power supply unit 100. The amplifier 98, the vibrator 99, and the power supply unit 100 have the same functions as the amplifier 85, the vibrator 86, and the power supply unit 87 of the left controller 4, respectively, and operate in the same manner.

The right controller 3 includes a processing unit 90 and an NFC antenna 93. The processing unit 90 controls the NFC antenna 93 in accordance with an instruction from the main body apparatus 2 via the communication control unit 91. The NFC antenna 93 performs short-range wireless communication based on the standard of NFC (Near Field Communication).

### [Manner of Grasping Controller]

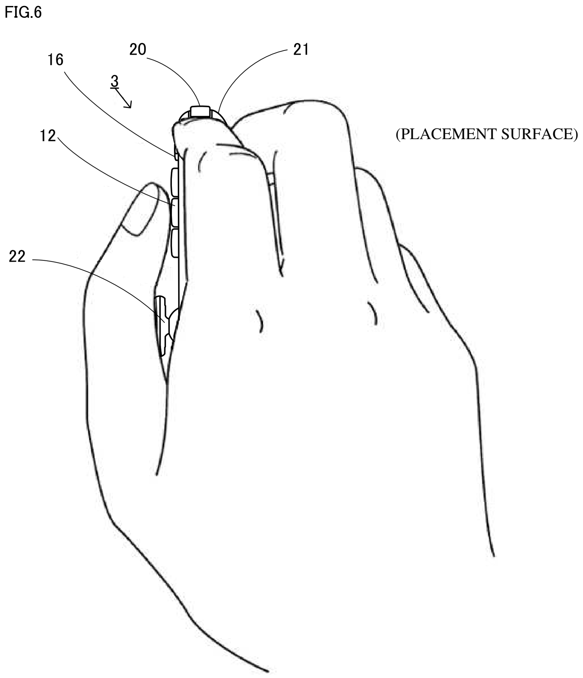

FIG. 6 is a schematic view showing an example of a state where the user grasps the right controller 3 by the right hand, places the right controller 3 on a placement surface, and uses the right controller 3 as a mouse, that is, a state where a mouse operation is performed. As shown in FIG. 6, the front portion of the right controller 3 faces frontward and the left portion thereof faces leftward. The palm of the right hand of the user covers the upper portion side of the right controller 3. The thumb of the right hand of the user is placed on the left portion side of the right controller 3. The thumb of the right hand of the user is put on the A button 12, for example. The index finger of the right hand of the user is put on the R button 20, for example, and the middle finger of the right hand of the user is put on the ZR button 21, for example. The user can operate the R button 20 and the ZR button 21 by the index finger or the middle finger of the right hand. The user can operate each input portion provided at the left portion, by the thumb of the right hand. Also, when the user uses the left controller 4 as a mouse by the left hand, the user can grasp the left controller 4 by the left hand and use the left controller 4 on a placement surface in the same manner. At this time, the right portion of the left controller 4 faces rightward.

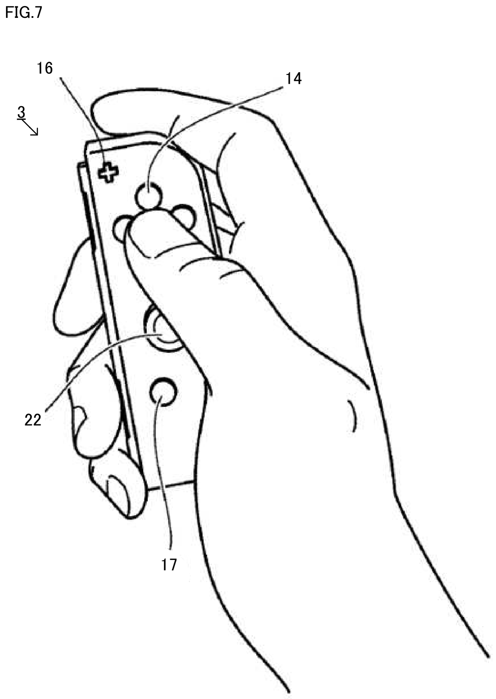

FIG. 7 is a schematic view showing an example of a state where the user operates the right controller 3 in the air while grasping the right controller 3 by the right hand. As shown in FIG. 7, in a state where the right controller 3 is detached from the main body apparatus 2, the right controller 3 can be used in the air by being grasped such that the longitudinal direction of the right controller 3 is along the up-down direction or the front-rear direction for the operating user. The user can operate the stick 22 (sometimes referred to as "stick operation"), for example, by the thumb of the right hand. In addition, the user can perform an operation of swinging (sometimes referred to as "swing operation") or an operation of changing an orientation (sometimes referred to as "orientation change operation") on the grasped right controller 3. Also, when the user uses the left controller 4 by the left hand in a state where the left controller 4 is detached from the main body apparatus 2, the user can use the left controller 4 in the same manner.

### [Outline of information processing of exemplary embodiment]

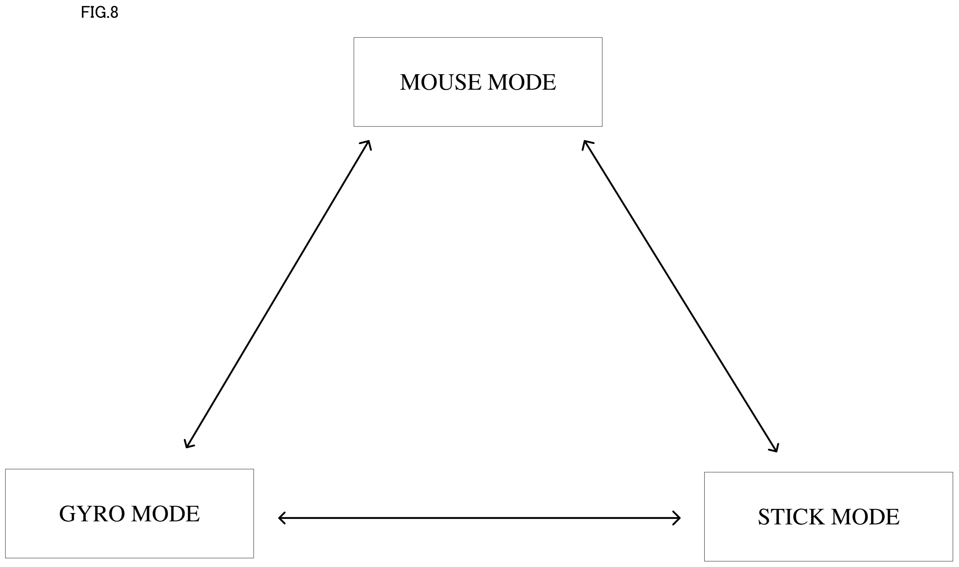

Hereinafter, the outline of processing of the exemplary embodiment will be specifically described with reference to FIG. 8 to FIG. 13. In the following, a description will be given with the case where the right controller 3 is used as an example. In a game of the exemplary embodiment, as an example, an aim sight that is a virtual object is displayed, the aim sight moves in accordance with an operation, and a bullet can be fired in a direction to the aim sight in accordance with a predetermined operation (e.g., a predetermined button operation). The same applies to the case where the left controller 4 is used, and thus the description of such a case is omitted.

### [Operation mode of controller]

FIG. 8 is a diagram for describing an operation mode of the controller and transition of the operation mode. As shown in FIG. 8, the operation mode of the controller (sometimes simply referred to as "mode") includes "mouse mode", "gyro mode", and "stick mode".

In the exemplary embodiment, in the mouse mode, if a swing operation on the right controller 3 with a predetermined strength or higher (e.g., a swing operation with a strength of 0.2G or more: hereinafter sometimes referred to simply as "swing operation") is detected by the inertial sensor, the mode transitions to the gyro mode. In the mouse mode, if a stick operation on the stick 22 is detected, the mode transitions to the stick mode. In the gyro mode, if a mouse operation on the right controller 3 is detected, the mode transitions to the mouse mode. In the gyro mode, if a stick operation on the stick 22 is detected, the mode transitions to the stick mode. In the stick mode, a swing operation on the right controller 3 with a predetermined strength or higher (e.g., a swing operation with a strength of 0.2G or more) is detected by the inertial sensor, the mode transitions to the gyro mode. In the stick mode, if a mouse operation on the right controller 3 is detected, the mode transitions to the mouse mode. The transition conditions for the operation mode are not limited to these and may be other conditions, and other conditions may be added.

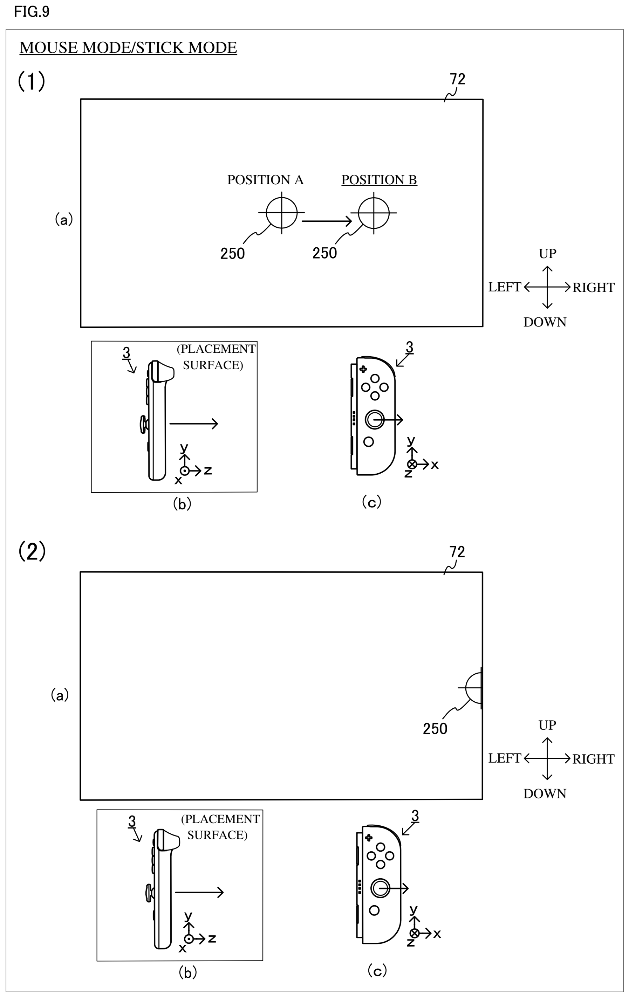

FIG. 9 is a diagram for describing control of an aim sight 250 in the mouse mode and the stick mode. First, the control of the aim sight 250 in the mouse mode will be described with reference to FIG. 9. The mouse mode is an operation mode in which the aim sight 250 is controlled based on output of the mouse sensor.

### [Control of aim sight in each operation mode]

If a mouse operation in which the right controller 3 placed on the placement surface is moved in the z-axis plus direction in the right controller coordinate system is performed as shown in (b) of FIG. 9 (1), the aim sight 250 (see position A) displayed on the display 72 moves rightward for a distance corresponding to the mouse operation (see position B) as shown in (a) of FIG. 9 (1). In addition, although not shown, if a mouse operation is performed on the right controller 3 on the placement surface in another direction, the aim sight 250 displayed on the display 72 similarly moves in the direction and for the distance corresponding to the mouse operation.

However, in the mouse mode, the aim sight 250 may be restricted such that the center of the aim sight 250 does not move outside the display area of the display 72 (sometimes simply referred to as "display area"). For example, in a state where the center of the aim sight 250 is located at the right edge of the display area as shown in (a) of FIG. 9 (2), even if a mouse operation in which the right controller 3 placed on the placement surface is moved in the z-axis plus direction in the right controller coordinate system is performed as shown in (b) of FIG. 9 (2), control is performed such that the aim sight 250 does not move further rightward. Accordingly, a part of the aim sight 250 is always displayed on the display 72.

Next, the control of the aim sight 250 in the stick mode will be described with reference to FIG. 9. The stick mode is an operation mode in which the aim sight 250 is controlled based on output through a stick operation.

For example, if an operation in which the stick 22 is tilted in the x-axis plus direction in the right controller coordinate system is performed as shown in (c) of FIG. 9 (1), the aim sight 250 (see position A) displayed on the display 72 moves rightward for a distance corresponding to the stick operation (see position B). In addition, although not shown, if a stick operation is performed in another direction, the aim sight 250 displayed on the display 72 similarly moves in the direction and for the distance corresponding to the stick operation. In addition, in the stick mode, as in the mouse mode, the aim sight 250 may be restricted such that the center of the aim sight 250 does not move outside the display area (see (a) of FIG. 9 (2)). In the mouse mode and the stick mode, the movement restriction of the aim sight 250 is not limited to these, and, for example, the movement of the aim sight 250 may be restricted such that the entirety of the aim sight 250 is located within the display area, or may be restricted such that a predetermined proportion (e.g., 1/4, 3/4) of the size of the aim sight 250 in the up-down direction or the left-right direction is located within the display area.

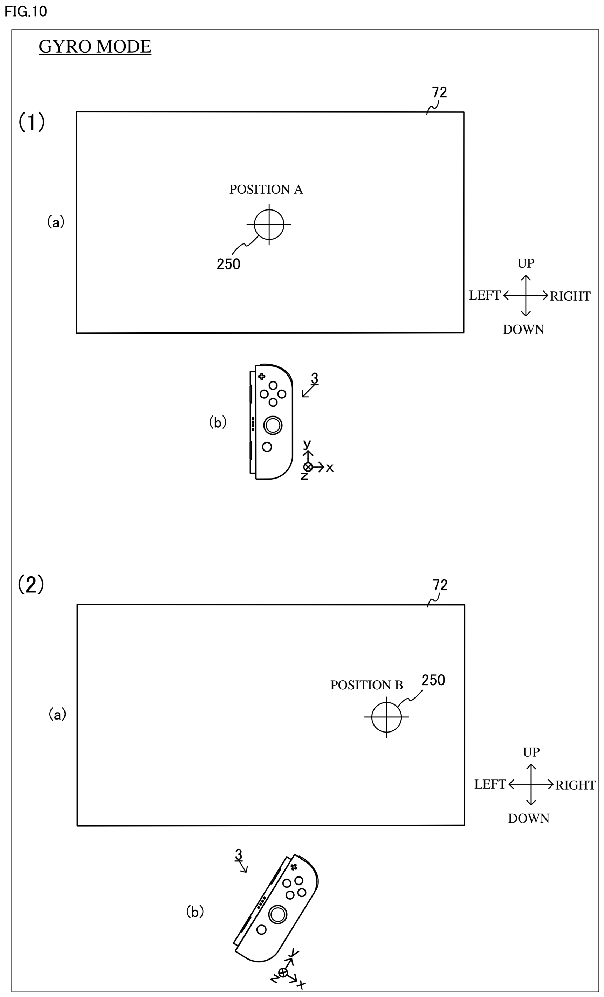

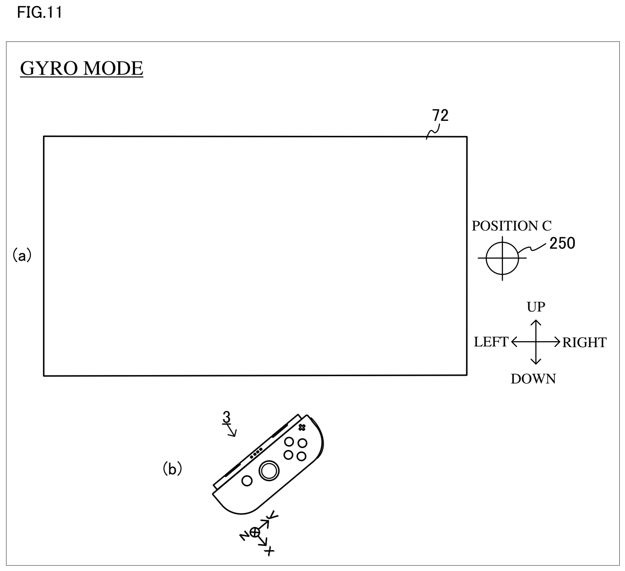

FIG. 10 and FIG. 11 are diagrams for describing control of the aim sight 250 in the gyro mode. The gyro mode is an operation mode in which the aim sight 250 is controlled based on output of the inertial sensor. In the gyro mode, the orientation of the right controller 3 indicated by the output of the inertial sensor and the display position of the aim sight 250 are associated with each other, and the display position of the aim sight 250 is controlled in accordance with the orientation of the right controller 3. A specific description will be given below.

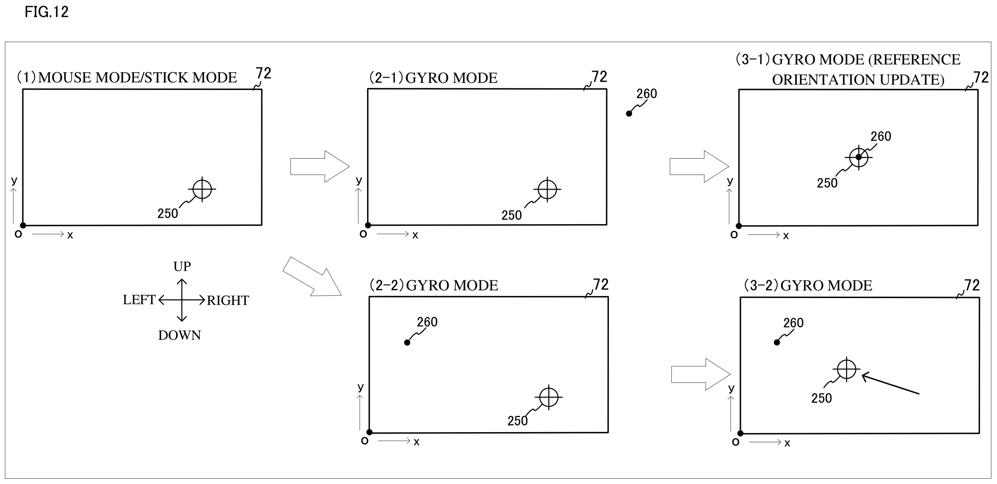

In the exemplary embodiment, the orientation of the right controller 3 when the aim sight 250 is displayed at the center of the display 72 is referred to as "reference orientation". In addition, a correspondence relationship in which the right controller 3 is in the reference orientation when the aim sight 250 is displayed at the center of the display 72 is referred to as "aim sight orientation correspondence relationship". Based on the aim sight orientation correspondence relationship, the movement of the display position of the aim sight 250 is controlled in accordance with orientation change of the right controller 3. Although described later with reference to FIG. 12, etc., the reference orientation may be reset.

For example, the case where the orientation of the right controller 3 when the aim sight 250 is displayed at the center position A of the display 72 as shown in (a) of FIG. 10 (1) (i.e., the reference orientation) is an orientation shown in (b) of FIG. 10 (1), is considered. In this case, for example, if the orientation of the right controller 3 becomes an orientation shown in (b) of FIG. 10 (2) (i.e., an orientation in which the right controller 3 has been rotated rightward in the z-axis plus direction from the orientation shown in (b) of FIG. 10 (1)), the aim sight 250 is displayed at a position shown in (a) of FIG. 10 (2) (i.e., a position B to the right of the position A shown in (a) of FIG. 10 (1)). Then, for example, if the orientation of the right controller 3 becomes an orientation shown in (b) of FIG. 11 (i.e., an orientation in which the right controller 3 has further been rotated rightward in the z-axis plus direction from the orientation shown in (b) of FIG. 10 (2)), the aim sight 250 shifts to a position shown in (a) of FIG. 11 (i.e., a position C further to the right from the position B shown in (a) of FIG. 10 (2)). Therefore, in accordance with an operation in which the right controller 3 is rotated as shown in (b) of FIG. 11, the aim sight 250 is not displayed on the display 72 but can be located outside the display area. At this time, a process of actually moving the aim sight 250 outside the display area may be performed, or a process of simply calculating coordinates corresponding to the aim sight 250 may merely be performed. The same applies to the case where the orientation of the right controller 3 becomes another orientation, and thus the specific description thereof is omitted.

As described above, in the gyro mode, the aim sight 250 is not restricted such that the aim sight 250 is not located outside the display area. In the gyro mode in which the aim sight 250 moves in accordance with the orientation of the right controller 3, if the aim sight 250 is restricted such that the aim sight 250 is not located outside the display area as in the mouse mode, etc., the relationship between the orientation of the right controller 3 and the display position of the aim sight 250 may change significantly, so that there is a risk that it will be difficult for the user to perform an operation. Therefore, in the gyro mode, control in which the aim sight 250 is not restricted such that the aim sight 250 is not located outside the display area, is performed.

### [Control of aim sight when switching operation mode]

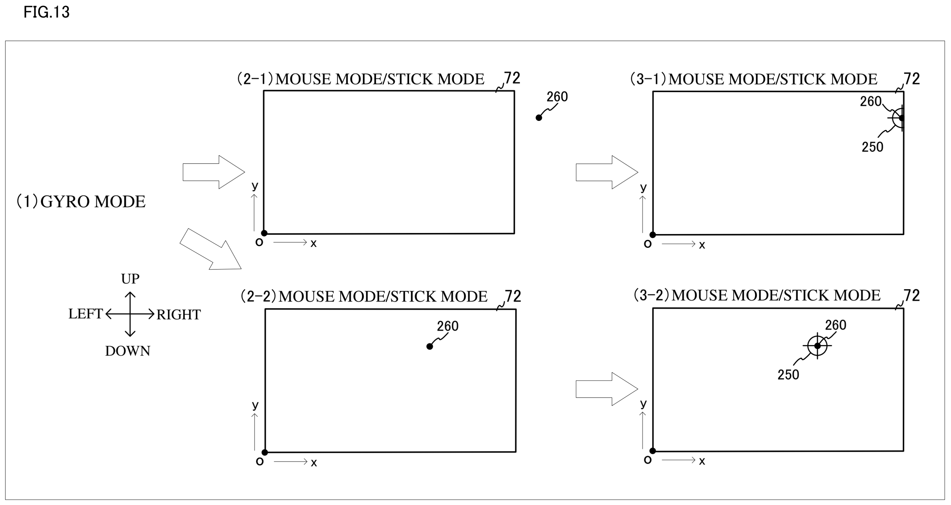

FIG. 12 is a diagram for describing control of the aim sight 250 when transitioning from the mouse mode or the stick mode to the gyro mode. FIG. 13 is a diagram for describing control of the aim sight 250 when transitioning from the gyro mode to the mouse mode or the stick mode. The operation mode that is the mouse mode or the stick mode is sometimes referred to as "mouse/stick mode". In FIG. 12 and FIG. 13, a computational aim sight position for displaying the aim sight 250 is shown by reference character 260. In addition, the center position of the aim sight 250 displayed on the display 72 is sometimes referred to as "display aim sight position", and the above computational aim sight position is sometimes referred to as "target aim sight position".

First, the control of the aim sight 250 when transitioning from the mouse/stick mode to the gyro mode will be described with reference to FIG. 12. The case where a swing operation (see FIG. 12 (1)) is performed in the mouse/stick mode and the mode transitions to the gyro mode, is considered. In this case, if the target aim sight position 260 corresponding to the orientation of the right controller 3 at the time of transition to the gyro mode is outside the display range (see FIG. 12 (2-1)), the reference orientation of the right controller 3 is updated to the orientation at the time of transition to the gyro mode, and the target aim sight position 260 and the display aim sight position are reset to the center of the display range (see FIG. 12 (3-1)). As described above, at the time of transition to the gyro mode, if the aim sight position corresponding to the orientation of the right controller 3 satisfies a predetermined condition, for example, if this aim sight position is outside the display range, the aim sight 250 is displayed within the display range, so that the user can be inhibited from losing track of the aim sight 250 and becoming confused. As another example, if the target aim sight position at the time of transition to the gyro mode is in a predetermined area within the display range, is away from the current display aim sight position by a predetermined distance or more, or the like, the aim sight 250 may be displayed at a position within the display range, for example, at a predetermined position. In the exemplary embodiment, since the aim sight 250 is displayed at the center of the display range (see FIG. 12 (3-1)), the user is inhibited from losing track of the aim sight 250. In addition, in the exemplary embodiment, the aim sight 250 is instantaneously moved (including not only the case of moving at a high speed, but also the case of moving instantaneously without passage of time) and displayed, so that the user can comfortably start performing an operation. The position after the movement and movement speed of the aim sight 250 are not limited to the above.

In the exemplary embodiment, when the aim sight 250 is displayed at the center of the display range, for example, in accordance with the target aim sight position being outside the display range at the time of transition to the gyro mode, the reference orientation is updated to the orientation of the right controller 3 at the time of transition to the gyro mode. Accordingly, it becomes easier for the user to operate the aim sight 250 in the gyro mode later. Such a reference orientation may not necessarily be updated, or an orientation other than that of the right controller 3 at the time of transition to the gyro mode, for example, a predetermined orientation, may be updated as the reference orientation.

The case where, when a swing operation is performed in the mouse/stick mode and the mode transitions to the gyro mode, the target aim sight position 260 corresponding to the orientation of the right controller 3 at the time of transition to the gyro mode is within the display range (see FIG. 12 (2-2)), will be described. In this case, the aim sight 250 is displayed so as to move toward the target aim sight position 260 (see FIG. 12 (3-2)). The movement speed of the aim sight 250 in this case is, for example, a speed that allows the user to visually recognize the aim sight 250 and may be a speed lower than that in the case where the aim sight 250 is instantaneously displayed within the display range when the aim sight 250 is outside the display range (see FIG. 12 (3-1)). The aim sight 250 may be moved while complementing the position between the position before movement (see FIG. 12 (2-2)) and the position after movement (see FIG. 12 (3-2)). By moving the aim sight 250 as described above, the user can be inhibited from losing track of the aim sight 250. The aim sight 250 in (2-1) and (2-2) of FIG. 12 is a successor to the aim sight 250 in the mouse/stick mode. In addition, the target aim sight position 260 in (3-1) and (2-2) of FIG. 12 can also be considered as an initial position of the actual aim sight in the gyro mode.

Next, the control of the aim sight 250 when transitioning from the gyro mode to the mouse/stick mode will be described with reference to FIG. 13. The case where, as an example, a mouse operation or a stick operation is performed in the gyro mode and the mode transitions to the mouse/stick mode as shown in FIG. 13 (1), is considered. In this case, if the target aim sight position 260 corresponding to the orientation of the right controller 3 at the time of transition to the mouse/stick mode is outside the display range (see FIG. 13 (2-1)), the target aim sight position 260 and the display aim sight position are positioned within the display range. In the exemplary embodiment, as an example, the display aim sight position is positioned at a position nearest to the target aim sight position 260 within the display range (see FIG. 13 (3-1)).

For example, the case where the display screen of the display 72 consists of 450 dots × 250 dots in horizontal and vertical directions, the lower left corner of the display range is defined as an origin o (0, 0), and the xy coordinates of the display range are in the range of (0, 0) to (450, 250), is considered. In the exemplary embodiment, in this case, if the target aim sight position 260 has coordinates (600, 100) outside the display range, the target aim sight position 260 and the display aim sight position are caused to have nearest coordinates (450, 100) within the display range; for example, if the target aim sight position 260 has coordinates (100, 350) outside the display range, the target aim sight position 260 and the display aim sight position are caused to have nearest coordinates (100, 250) within the display range; and, for example, if the target aim sight position 260 has coordinates (600, 350) outside the display range, the target aim sight position 260 and the display aim sight position are caused to have nearest coordinates (450, 250) within the display range. That is, the x coordinates and the y coordinates of the target aim sight position 260 and the display aim sight position are converted to the nearest x and y coordinates within the display range, respectively.

Since the aim sight 250 is displayed within the display range when the mode transitions to the mouse/stick mode as described above, it is possible to avoid a situation where the user becomes confused due to the aim sight 250 not being displayed. In addition, since the aim sight 250 is displayed at the nearest position within the display range, the user who has operated in the gyro mode so far can continue to operate without any discomfort.

In the exemplary embodiment, when a mouse operation or a stick operation is performed in the gyro mode and the mode transitions to the mouse/stick mode, if the target aim sight position 260 corresponding to the orientation of the right controller 3 at the time of transition to the mouse/stick mode is within the display range (see FIG. 13 (2-2)), the target aim sight position 260 is set as the display aim sight position (see FIG. 13 (3-2).

### [Details of information processing of exemplary embodiment]

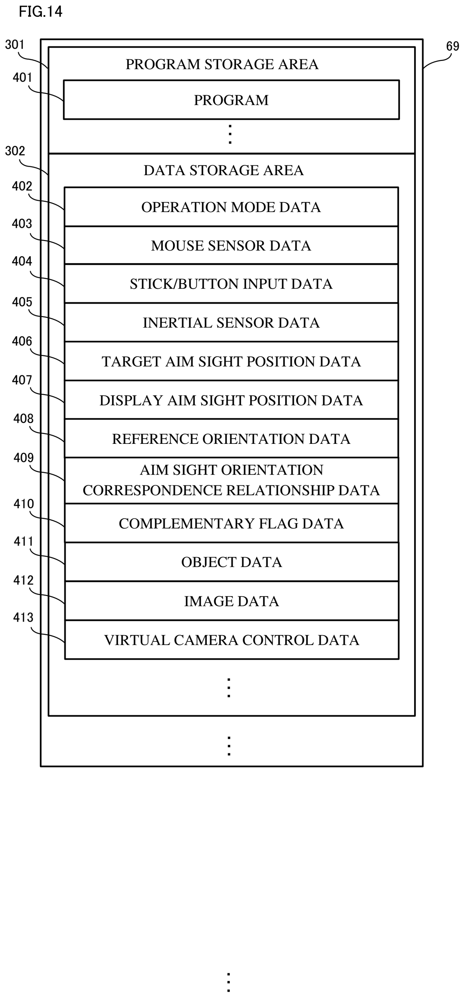

Next, the information processing of the exemplary embodiment will be described in detail with reference to FIG. 14 to FIG. 18. In the following, a description will be given with the case where the right controller 3 is used as an example. The same applies to the case where the left controller 4 is used, and thus the description of such a case is omitted.

### [Data to be used]

Next, various data stored in the DRAM 69 will be described. FIG. 14 shows an example of data stored in the DRAM 69 of the main body apparatus 2. As shown in FIG. 14, the DRAM 69 is provided with at least a program storage area 301 and a data storage area 302.

In the program storage area 301, at least a program 401 is stored. In the data storage area 302, at least operation mode data 402, mouse sensor data 403, stick/button input data 404, inertial sensor data 405, target aim sight position data 406, display aim sight position data 407, reference orientation data 408, aim sight orientation correspondence relationship data 409, complementary flag data 410, object data 411, image data 412, and virtual camera control data 413 are stored.

The program 401 is a game program for executing game processing.

The operation mode data 402 is data indicating whether the operation mode is the mouse mode, the gyro mode, or the stick mode, and including a history of the operation mode before a predetermined frame.

The mouse sensor data 403 is data regarding the output of the mouse sensor 24 and includes dy/dz data. The dy/dz data is output data of the mouse sensor 24. When the opening 23 of the mouse sensor 24 is closed by a placement surface or the like, the dy/dz data is data indicating a movement distance per frame time (sometimes referred to as "dy/dz") in the y-axis direction and the z-axis direction in the coordinate system of the right controller (i.e., the yz plane; see FIG. 2) relative to the placement surface or the like. The dy/dz may be calculated from the output data of the mouse sensor 24 by the communication control unit 91, the processor 63, or the like.

The stick/button input data 404 is data indicating operations performed on the stick 22 and each button 95 of the right controller 3.

The inertial sensor data 405 is data outputted from the inertial sensor of the right controller 3 and is, for example, data from which accelerations in the x, y, and z-axis directions in the right controller coordinate system (see FIG. 2) and angular velocities around the x, y, and z-axis can be calculated. Using the inertial sensor data 405, for example, the orientation, movement, etc., of the right controller 3 can be calculated.

The target aim sight position data 406 is data indicating a target aim sight position (see the target aim sight position 260 in FIG. 12 and FIG. 13) in a screen coordinate system obtained by converting a virtual space captured by a virtual camera to a planar coordinate system. The target aim sight position moves based on the dy/dz data in the mouse mode, moves based on an operation on the stick 22 in the stick mode, and moves based on orientation change of the right controller 3 in the gyro mode.

The display aim sight position data 407 is data indicating the display position of the aim sight 250 (i.e., the display aim sight position) in the screen coordinate system described above.

The reference orientation data 408 is data indicating the reference orientation, which is the orientation of the right controller 3 when the aim sight 250 is displayed at the center of the display 72.

The aim sight orientation correspondence relationship data 409 is data indicating the aim sight orientation correspondence relationship, which is the correspondence relationship in which the reference orientation indicated by the reference orientation data 408 is taken when the aim sight 250 is displayed at the center of the display 72.

The complementary flag data 410 is flag data indicating whether or not to execute a complementary process of moving the aim sight 250 toward the target aim sight position 260 (see FIG. 12 (3-2)).

The object data 411 is data for virtual objects to be placed in the virtual space and is, for example, data for virtual objects such as bullets to be fired in the direction to the aim sight 250, player characters, opponent characters, and ground.

The image data 412 is image data for an image of the aim sight 250, which is a virtual object, animation images, backgrounds, virtual effects, etc. The image of the aim sight 250 is placed in the screen coordinate system described above and displayed on the display 72 or the like. Instead of displaying the aim sight 250 on the display 72 or the like by placing the aim sight 250 in the screen coordinate system, the aim sight 250 may be displayed on the display 72 or the like by placing the aim sight 250 in the virtual space and capturing the virtual space by the virtual camera. That is, instead of the image data 412, the object data 411 may be used for the aim sight 250.

The virtual camera control data 413 is data for controlling the virtual camera placed in the virtual space to capture an image of the virtual space.

In addition, various data to be used for rendering processing, etc., are stored in the DRAM 69 as necessary.

### [Example of detailed information processing]

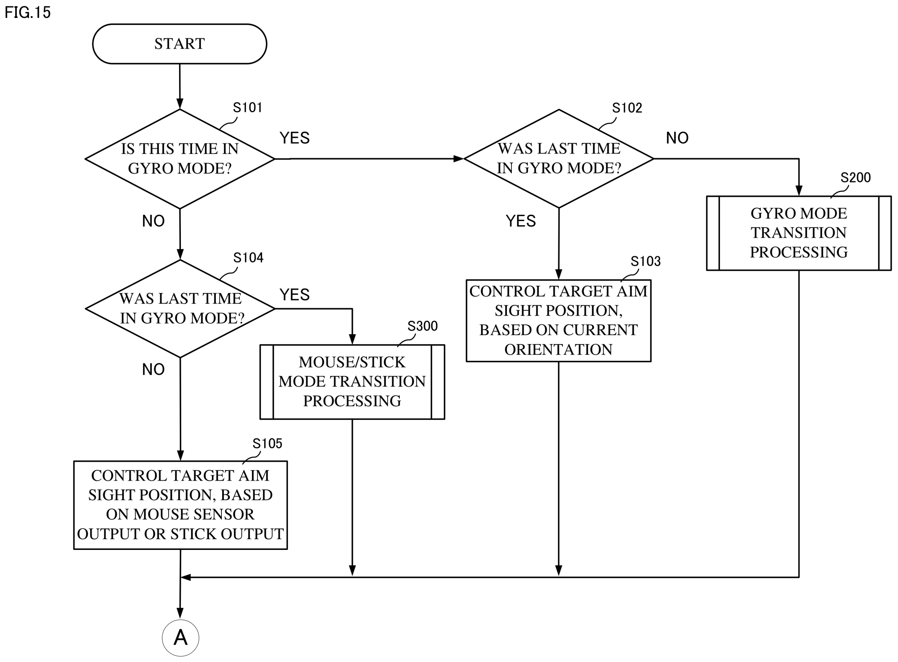

Next, the processing according to the exemplary embodiment will be described with reference to flowcharts. FIG. 15 to FIG. 18 are examples of flowcharts showing the processing according to the exemplary embodiment. In the following, processing characteristic to the exemplary embodiment will be mainly described, and the description for other processing such as rendering processing is basically omitted. In addition, the following processing may be executed at predetermined intervals (e.g., intervals of frame processing executed per 1/60 second).

When the game processing is started, the processor 63 determines in step S101 in FIG. 15 whether or not the processing at this time is processing in the gyro mode, based on the operation mode data 402. If the result of the determination in step S101 is YES, the processing proceeds to step S102, and if the result of the determination in step S 101 is NO, the processing proceeds to step S104.

In step S102, the processor 63 determines whether or not the last processing is processing in the gyro mode, based on the operation mode data 402. If the result of the determination in step S102 is YES, the processing proceeds to step S103, and if the result of the determination in step S102 is NO, the processing proceeds to gyro mode transition processing in step S200.

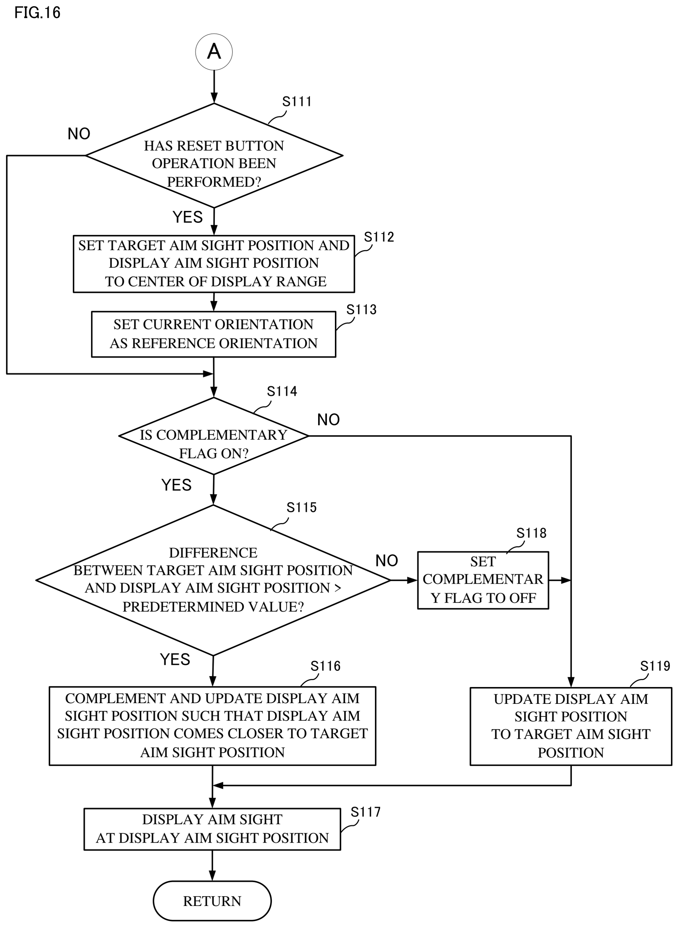

In step S103, in the gyro mode, the processor 63 controls the target aim sight position, based on the current orientation. Specifically, based on the aim sight orientation correspondence relationship indicated by the aim sight orientation correspondence relationship data 409, the processor 63 calculates the target aim sight position corresponding to the current orientation of the right controller 3 calculated based on the inertial sensor data 405 (see FIG. 10). Then, the processing proceeds to step S111 in FIG. 16.

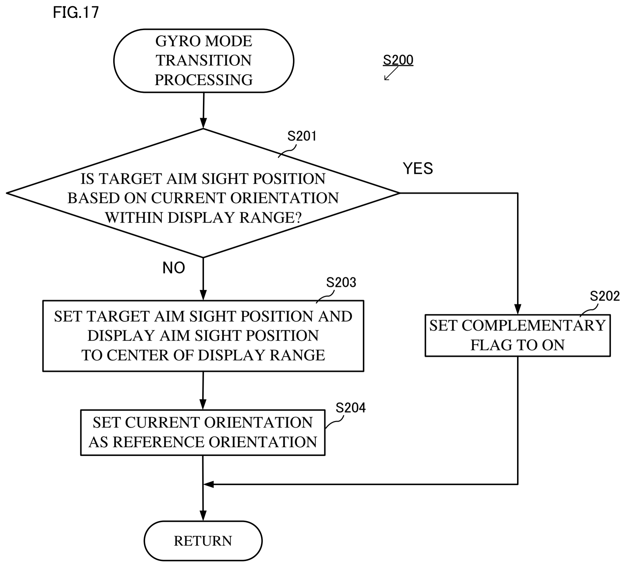

In step S200, the processor 63 executes the gyro mode transition processing. FIG. 17 is an example of a flowchart of the gyro mode transition processing.

In step S201 in FIG. 17, the processor 63 determines whether or not the target aim sight position based on the current orientation is within the display range, based on the target aim sight position data 406. If the result of the determination in step S201 is YES, the processing proceeds to step S202, and if the result of the determination in step S201 is NO, the processing proceeds to step S203.

In step S202, the processor 63 sets a complementary flag of the complementary flag data 410 to ON. Then, the processing proceeds to step S111 in FIG. 16.

In step S203, the processor 63 sets the target aim sight position indicated by the target aim sight position data 406 and the display aim sight position indicated by the display aim sight position data 407 to the center of the display range (see (3-1) of FIG. 12). Then, the processing proceeds to step S204.

In step S204, the processor 63 sets the current orientation of the right controller 3 calculated based on the inertial sensor data 405 as the reference orientation indicated by the reference orientation data 408 (see (3-1) of FIG. 12). That is, the processor 63 updates the reference orientation to the current orientation. Then, the processing proceeds to step S111 in FIG. 16.

In step S104 in FIG. 15, the processor 63 determines whether or not the last processing is processing in the gyro mode, based on the operation mode data 402. If the result of the determination in step S104 is YES, the processing proceeds to mouse/stick mode transition processing in step S300, and if the result of the determination in step S104 is NO, the processing proceeds to step S105.

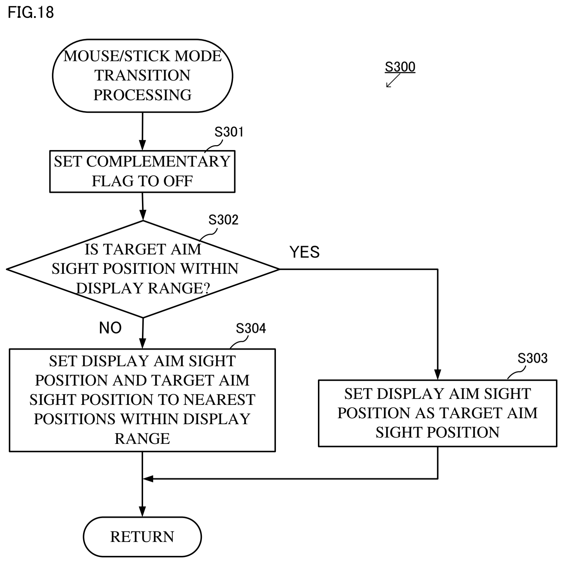

In step S300, the processor 63 executes the mouse/stick mode transition processing. FIG. 18 is an example of a flowchart of the mouse/stick mode transition processing.

In step S301 in FIG. 18, the processor 63 sets the complementary flag of the complementary flag data 410 to OFF. Then, the processing proceeds to step S302.

In step S302, the processor 63 determines whether or not the target aim sight position is within the display range, based on the target aim sight position data 406. If the result of the determination in step S302 is YES, the processing proceeds to step S303, and if the result of the determination in step S302 is NO, the processing proceeds to step S304.

In step S303, the processor 63 sets the display aim sight position indicated by the display aim sight position data 407 to the target aim sight position indicated by the target aim sight position data 406 (see (3-2) of FIG. 13). Then, the processing proceeds to step S111 in FIG. 16.

In step S304, the processor 63 sets the display aim sight position indicated by the display aim sight position data 407 and the target aim sight position indicated by the target aim sight position data 406 to the nearest positions within the display range (see (3-1) of FIG. 12). Then, the processing proceeds to step S111 in FIG. 16.

In step S105 in FIG. 15, the processor 63 controls the target aim sight position, based on the mouse sensor output or the stick output (i.e., the stick/button input data 404), in the mouse mode or the stick mode (see FIG. 9). Then, the processing proceeds to step S111 in FIG. 16.

In step S111 in FIG. 16, the processor 63 determines whether or not an operation on a reset button has been performed. Specifically, the processor 63 determines whether or not, for example, the ZR button 21 of the right controller 3 has been performed, based on the stick/button input data 404. The reset button may be different depending on the operation mode. If the result of the determination in step S111 is YES, the processing proceeds to step S112, and if the result of the determination in step S111 is NO, the processing proceeds to step S114.

In step S112, the processor 63 sets the target aim sight position and the display aim sight position to the center of the display range, as in step S203 in FIG. 17. Then, the processing proceeds to step S113.

In step S113, the processor 63 sets the current orientation as the reference orientation, as in step S204 in FIG. 17. Then, the processing proceeds to step S114.

In step S114, the processor 63 determines whether or not the complementary flag indicated by the complementary flag data 410 is ON. If the result of the determination in step S114 is YES, the processing proceeds to step S115, and if the result of the determination in step S114 is NO, the processing proceeds to step S119.

In step S115, the processor 63 determines whether or not the difference between the target aim sight position and the display aim sight position is greater than a predetermined value (e.g., 10 dots), based on the target aim sight position data 406 and the display aim sight position data 407. If the result of the determination in step S115 is YES, the processing proceeds to step S116, and if the result of the determination in step S115 is NO, the processing proceeds to step S118. Also, if the target aim sight position is outside the display range, the processing may proceed to step S118.

In step S116, the processor 63 complements and updates the display aim sight position indicated by the display aim sight position data 407 such that the display aim sight position comes closer to the target aim sight position indicated by the target aim sight position data 406 by a predetermined distance (e.g., 10 dots) (see (3-2) of FIG. 12). Then, the processing proceeds to step S117.

In step S118, the processor 63 sets the complementary flag of the complementary flag data 410 to OFF. Then, the processing proceeds to step S119.

In step S119, the processor 63 updates the display aim sight position indicated by the display aim sight position data 407 to the target aim sight position indicated by the target aim sight position data 406. Then, the processing proceeds to step S117.

In step S117, the processor 63 displays the aim sight 250 at the display aim sight position indicated by the display aim sight position data 407. Then, the processing returns to step S101 in FIG. 15.

According to the exemplary embodiment, in the mouse/stick mode and the gyro mode, the aim sight position is reset in accordance with a button operation, and the reference orientation is reset when a reset is performed in either mode (see steps S111 to S113 in FIG. 16). When the user performs a reset by a button operation in the mouse/stick mode, the user may be in an easy-to-operate posture and/or controller grasping state, and the mode may transition to the gyro mode without this state changing significantly. Due to this, by resetting the aim sight position and also resetting the reference orientation, it is possible that the user can smoothly start an orientation change operation at the time of transitioning to the gyro mode later.

In addition, in the exemplary embodiment, since the orientation of the controller at the time of transition to the gyro mode satisfies the condition for transitioning to the gyro mode, the orientation of the controller may become an orientation deviating from the reference orientation and the aim sight position may be moved significantly from the center of the display range. For example, if the condition for transitioning to the gyro mode is at least any one of a swing operation, a predetermined angle condition, an angular velocity condition, and an acceleration condition, such a situation may occur. According to the exemplary embodiment, even in such a case, the aim sight 250 is displayed within the display range, so that the user can be inhibited from losing track of the aim sight 250.

In addition, in the exemplary embodiment, for example, after an orientation change operation is performed in the air in the gyro mode, if a mouse operation is performed on a work surface such as a desk or a thigh of the user and then an orientation change operation is performed in the air in the gyro mode again, the orientations of the controller in the gyro mode at the first time and the second time may be significantly different. According to the exemplary embodiment, since control in which the aim sight position and the reference orientation are reset is performed (see (2-1) and (3-1) of FIG. 12), the user can be inhibited from losing track of the aim sight 250, for example, when repeatedly switching between an operation in the gyro mode and an operation in the mouse mode.

### [Modifications]

Depending on the operation mode, the display form such as the color and shape of the aim sight 250, which is a virtual object, may be changed. In such a case, the changed aim sight can also be regarded as substantially the same aim sight.

The virtual object to be controlled is not limited. For example, a cursor having an arrow shape or the like, a pointer, a player object operated by the user, or another virtual object may be controlled.

In the mouse/stick mode, as in the gyro mode (see FIG. 11), the aim sight 250 may be movable outside the display range.

In the above exemplary embodiment, the example of having the mouse mode, the gyro mode, and the stick mode has been described, but in another example, the mouse mode may not necessarily be included, or the stick mode may not necessarily be included.

In addition, in the above exemplary embodiment, the example in which the reference orientation is updated to the current orientation of the controller if the condition that the target aim sight position corresponding to the orientation of the controller at the time of transition to the gyro mode is outside the display range is satisfied, has been described (see FIG. 12 and FIG. 17). However, for example, a range of the orientation of the controller where the target aim sight position is outside the display range may be calculated in advance based on the reference orientation. Then, if a condition that the orientation of the controller at the time of transition to the gyro mode is included in the above range calculated in advance is satisfied, the reference orientation may be updated to the current orientation of the controller.

In addition, in the above exemplary embodiment, the example in which the aim sight is displayed at the center of the display range and the reference orientation is updated if the target aim sight position corresponding to the orientation of the controller at the time of transition to the gyro mode is outside the display range, has been described (see FIG. 12 and FIG. 17). Since the target aim sight position is the position corresponding to the center of the aim sight, in this example, even if a part of the aim sight is to be displayed within the display range, if the target aim sight position (i.e., the position corresponding to the center of the aim sight) is outside the display range, the aim sight is displayed at the center of the display range and the reference orientation is updated. Therefore, at the time of transition to the gyro mode, if the entirety of the aim sight falls outside the display range and the aim sight is not displayed at all, control in which the aim sight is displayed at the center of the display range and the reference orientation is updated may be performed. In addition, at the time of transition to the gyro mode, if the entirety of the aim sight is located in a predetermined edge area of the display range (e.g., an edge area having a width that allows the entirety or a part of the aim sight to fit therein) and the range of the area outside the display range, control in which the aim sight is displayed at the center of the display range and the reference orientation is updated may be performed. "The virtual object (e.g., the aim sight) is located in a certain range" may include both the case where the entirety of the virtual object is located within the certain range and the case where a part of the virtual object is located within the certain range. At the time of transition to the gyro mode, if the virtual object is located in the edge area of the display range, control in which the virtual object is displayed at the center of the display range and the reference orientation is updated may be performed. At the time of transition to the gyro mode, if the virtual object is not located, for example, within a predetermined range including the center of the display range, control in which the virtual object is displayed at the center of the display range and the reference orientation is updated may be performed.

If the target aim sight position corresponding to the orientation of the controller at the time of transition to the gyro mode is outside the display range, control in which the aim sight is displayed such that the center of the aim sight is at the nearest position within the display range may be performed.

In addition, at the time of transition to the gyro mode, if the target aim sight position is within the display range, the aim sight may be instantaneously moved to the target aim sight position without performing complementary update (see (2-2) and (3-2) of FIG. 12).

In addition, the various data in the above exemplary embodiment are examples, and other data converted therefrom, etc., may be used as appropriate in each process.

In addition, the game system is an example of the information processing system, and the information processing system may be a system in which no game is executed. Moreover, the main body apparatus may be a general-purpose personal computer. Furthermore, the controller may be a general-purpose mouse.

The right controller and the left controller may each be capable of being gasped with one hand and operated by the user. In this case, for example, either controller may be capable of being operated in the three modes, only one of the controllers may be capable of being operated in the three modes, or the modes in which operations are performed may be shared between the two controllers. For example, a mouse operation may be performed with the right controller, and a gyro operation may be performed with the left controller. Alternatively, for example, a mouse operation and a gyro operation may be performed with the right controller, and a mouse operation and a stick operation may be performed with the left controller. That is, the sharing of the modes includes the case where both controllers support a part or some of the modes. In the case where the modes are shared as described above, even if, on a controller with which an operation for the aim sight cannot be performed in a predetermined mode, a device input corresponding to the predetermined mode is performed, transition to the predetermined mode may not necessarily be made. For example, in the case where, with the right controller, a mouse operation and a gyro operation can be performed as an operation for the aim sight but a stick operation cannot be performed, even if a stick operation is performed, the right controller may not necessarily transition to the stick mode. A device that is not used to operate the aim sight may be used for other game processing. For example, in the above example, the stick of the right controller may be used to move the virtual camera or the player object.

The controller in the exemplary embodiment is an example, and, for example, the shape thereof is not limited. The controller may not necessarily be attachable and detachable to and from the main body apparatus. Each of the two controllers may not necessarily include a mouse sensor. Only one of the two controllers may include a mouse sensor. Each of the two controllers may not necessarily include a stick. Only one of the two controllers may include a stick. The controller may not necessarily be one set of two controllers. At this time, one controller may not necessarily include a mouse sensor or a stick. One controller may include two or more sticks. In this case, for example, the aim sight may be operated in accordance with an operation on one stick and the mode may transition to the stick mode, while the aim sight may not necessarily be operated in accordance with an operation on another stick and the stick mode may not necessarily be transitioned to. In this case, the other stick may be used to move the virtual camera or the player object.

The target to which the above processing is applied is not limited to the game processing. For example, the above processing may be applied to drafting applications, moving image editing applications, or operating systems. As an example, the above processing may be applied to menu operations for an operating system. In the case where the above processing is applied to game processing, the above processing may be applied to menu operations for a game.

In an information processing system including a terminal-side apparatus and a server-side apparatus capable of communicating therewith via a network, at least some of the series of processes described above may be executed by the server-side apparatus. The server may be composed of a plurality of information processing apparatuses, and the processes may be executed by the plurality of information processing apparatuses in a shared manner.

While the exemplary embodiment and the modifications have been described, the description thereof is in all aspects illustrative and not restrictive. It is to be understood that various other modifications and variations may be made to the exemplary embodiment and the modifications.

## Claims

1. An information processing method using a controller (3, 4) including an inertial sensor (83, 84, 96, 97) and at least one of a mouse sensor (24, 44) and a directional operation portion (22, 42) operated by a user , the information processing method comprising:
setting any one mode among a plurality of modes including a first mode and a second mode;
in the first mode, determining a position of a virtual object (250), based on output of the directional operation portion or the mouse sensor;
in the second mode, determining the position of the virtual object, based on output of the inertial sensor;
when determining the position of the virtual object in the second mode, determining the position of the virtual object in accordance with an orientation of the controller, based on a correspondence relationship in which the virtual object is located at a predetermined position within a display range when the controller is in a reference orientation; and
when a first orientation that is an orientation of the controller when switching from the first mode to the second mode satisfies at least a first condition, updating the reference orientation to an orientation allowing a position of the virtual object corresponding to the first orientation to be within the display range.

2. The information processing method according to claim 1, wherein the first condition includes a condition that the position of the virtual object corresponding to the first orientation is outside the display range.

3. The information processing method according to claim 1 or 2, further comprising, when the first orientation satisfies the first condition, updating the reference orientation to the first orientation.

4. The information processing method according to any one of claims 1 to 3, wherein the predetermined position is a position of a center of the display range.

5. The information processing method according to any one of claims 1 to 4, further comprising, when the first orientation does not satisfy the first condition, moving the virtual object at a lower speed from a position of the virtual object in the first mode toward a position of the virtual object in the second mode than when the first orientation satisfies the first condition.

6. The information processing method according to any one of claims 1 to 5, further comprising, if the position of the virtual object is outside the display range when switching from the second mode to the first mode, placing the virtual object within the display range.

7. The information processing method according to claim 6, further comprising determining a position of the virtual object within the display range in accordance with the position of the virtual object outside the display range when switching from the second mode to the first mode.

8. The information processing method according to any one of claims 1 to 7, further comprising:
in the first mode and the second mode, updating the position of the virtual object to the predetermined position in accordance with a button operation; and
when the position of the virtual object is updated to the predetermined position, updating the reference orientation to an orientation of the controller upon the updating.

9. The information processing method according to any one of claims 1 to 8, further comprising switching from the first mode to the second mode at least when the output of the inertial sensor satisfies a second condition.

10. The information processing method according to any one of claims 1 to 9, further comprising, in the first mode, determining the position of the virtual object, based on the output of the mouse sensor.

11. The information processing method according to claim 10, further comprising:
setting any one mode among a plurality of modes including the first mode, the second mode, and a third mode;
when determining the position of the virtual object in the third mode, determining the position of the virtual object, based on the output of the directional operation portion; and
when the first orientation when switching from the first mode or the third mode to the second mode satisfies at least the first condition, updating the reference orientation to an orientation allowing the position of the virtual object corresponding to the first orientation to be within the display range.

12. An information processing system comprising means for executing the information processing method according to any one of claims 1 to 11.

13. An information processing program that, when executed by a computer, causes the computer to execute the information processing method according to any one of claims 1 to 11.

## Amended claims

### Amended claims in accordance with Rule 137(2) EPC.

1. An information processing method using a controller (3, 4) including an inertial sensor (83, 84, 96, 97) and at least one of a mouse sensor (24, 44) and a directional operation portion (22, 42) operated by a user , the information processing method comprising:
setting any one mode among a plurality of modes including a first mode and a second mode;
in the first mode, determining a position of a virtual object (250), based on output of the mouse sensor;
in the second mode, determining the position of the virtual object, based on output of the inertial sensor;
when determining the position of the virtual object in the second mode, determining the position of the virtual object in accordance with an orientation of the controller, based on a correspondence relationship in which the virtual object is located at a predetermined position within a display range when the controller is in a reference orientation; and
when a first orientation that is an orientation of the controller when switching from the first mode to the second mode satisfies at least a first condition, updating the reference orientation to an orientation allowing a position of the virtual object corresponding to the first orientation to be within the display range.

2. The information processing method according to claim 1, wherein the first condition includes a condition that the position of the virtual object corresponding to the first orientation is outside the display range.

3. The information processing method according to claim 1 or 2, further comprising, when the first orientation satisfies the first condition, updating the reference orientation to the first orientation.

4. The information processing method according to any one of claims 1 to 3, wherein the predetermined position is a position of a center of the display range.

5. The information processing method according to any one of claims 1 to 4, further comprising, when the first orientation does not satisfy the first condition, moving the virtual object at a lower speed from a position of the virtual object in the first mode toward a position of the virtual object in the second mode than when the first orientation satisfies the first condition.

6. The information processing method according to any one of claims 1 to 5, further comprising, if the position of the virtual object is outside the display range when switching from the second mode to the first mode, placing the virtual object within the display range.

7. The information processing method according to claim 6, further comprising determining a position of the virtual object within the display range in accordance with the position of the virtual object outside the display range when switching from the second mode to the first mode.

8. The information processing method according to any one of claims 1 to 7, further comprising:
in the first mode and the second mode, updating the position of the virtual object to the predetermined position in accordance with a button operation; and
when the position of the virtual object is updated to the predetermined position, updating the reference orientation to an orientation of the controller upon the updating.

9. The information processing method according to any one of claims 1 to 8, further comprising switching from the first mode to the second mode at least when the output of the inertial sensor satisfies a second condition.

10. The information processing method according to any one of claims 1 to 9, further comprising:
setting any one mode among a plurality of modes including the first mode, the second mode, and a third mode;
when determining the position of the virtual object in the third mode, determining the position of the virtual object, based on the output of the directional operation portion; and
when the first orientation when switching from the first mode or the third mode to the second mode satisfies at least the first condition, updating the reference orientation to an orientation allowing the position of the virtual object corresponding to the first orientation to be within the display range.

11. An information processing system comprising means for executing the information processing method according to any one of claims 1 to 10.

12. An information processing program that, when executed by a computer, causes the computer to execute the information processing method according to any one of claims 1 to 10.
